# EUROPEAN PATENT APPLICATION

(11) **EP 4 491 594 A1**
(43) Date of publication of application: **15.01.2025**
(21) Application number: 23220702.7
(22) Date of filing: 29.12.2023
(51) Int. Cl.: C03C 17/00, A47J 36/02, B24C 1/06, C03C 17/28, C03C 17/34

(54) **HIGH BOROSILICATE GLASS PRODUCT WITH COATING LAYER AND PREPARATION METHOD THEREOF**

(30) Priority: 11.07.2023 CN 202310844690
(71) Applicant: Hebei Sanxia Kitchenware Technology Co. Ltd, Xingtai City, Hebei 055350 (CN)
(72) Inventor: CHEN, Chunxiao, Xingtai City, Hebei, 055350 (CN)
(74) Representative: Canzler & Bergmeier Patentanwälte Partnerschaft mbB

(57) **Abstract**

Provided are a high borosilicate glass product with a non-stick coating layer and a preparation method thereof, relating to the technical field of non-stick coating layer preparation. The preparation method includes: sandblasting the high borosilicate glass product to obtain a rough glass product with a roughness of 0.5 to 4; and spraying a coating on a surface of the rough glass product to obtain a coated glass product, and sintering the coated glass product to obtain the high borosilicate glass product with a non-stick coating layer and/or a colored coating layer.

## Description

### TECHNICAL FIELD

The present disclosure relates to the technical field of non-stick coating layer preparation, and in particular to a high borosilicate glass product with a coating layer and a preparation method thereof.

### BACKGROUND

At present, glass products such as high borosilicate glass crispers on the market are prone to leaving residue when placing some sticky foods. A non-stick coating layer on the surface of high borosilicate glass products could avoid the sticky substance residue. It is generally necessary to pretreat the glass products in order to improve the adhesion strength of the non-stick coating layer on the bottom surface of the glass baking pan. For example, Chinese patent publication No. CN115594414A has disclosed a method for making a glass baking pan with a non-stick coating layer, including the following steps: S 1, cleaning a formed transparent glass baking pan with alkaline water and then drying; S2, frosting a bottom surface of the glass baking pan through a frosting device for the bottom surface of the glass baking pan; S3, preheating the glass baking pan and spraying a primer on an entire surface of a resulting preheated glass baking pan; S4, drying the glass baking pan sprayed with the primer and then cooling; S5, spraying a top coat on an entire surface of a resulting cooled glass baking pan; and S6, continuing drying the glass baking pan sprayed with the top coat to obtain the glass baking pan with a non-stick coating layer that is dried and shaped; where the frosting is conducted in a specific frosting device for the bottom surface of the glass baking pan. However, the pretreatment of the glass product before the preparation of the non-stick coating layer in the above method includes alkaline water cleaning, drying, and frosting with a specific frosting device for the bottom surface of the glass baking pan, resulting in a complicated process.

### SUMMARY

In view of this, the present disclosure aims to provide a high borosilicate glass product with a coating layer and a preparation method thereof. The preparation method according the present disclosure has a simple process and could achieve a high bonding strength between a non-stick coating layer or colored coating layer and a high borosilicate glass.

To achieve the above object, the present disclosure provides the following technical solutions.

The present disclosure provides a method for preparing a non-stick coating layer on a surface of a high borosilicate glass product, including the following steps:
sandblasting the high borosilicate glass product to obtain a rough glass product with a roughness of 0.5 to 4; and
spraying a coating on a surface of the rough glass product to obtain a coated glass product, and sintering the coated glass product to obtain the high borosilicate glass product with a coating layer; where the coating layer includes at least one selected from the group consisting of the non-stick coating layer and a colored coating layer; the non-stick coating layer includes at least one selected from the group consisting of an inner surface non-stick coating layer and an outer surface non-stick coating layer; the colored coating layer includes at least one selected from the group consisting of an inner surface colored coating layer and an outer surface colored coating layer; and under the condition that the coating layer includes the non-stick coating layer and the colored coating layer, the non-stick coating layer is the inner surface non-stick coating layer and the colored coating layer is the outer surface colored coating layer.

In some embodiments, the inner surface non-stick coating layer and the outer surface non-stick coating layer each independently include one layer of the non-stick coating layer, two layers of the non-stick coating layer, or N layers of the non-stick coating layer; the one layer of the non-stick coating layer is a top coating layer; the two layers of the non-stick coating layer include a base coating layer and the top coating layer that are laminated in sequence; and the N layers of the non-stick coating layer include the base coating layer, (N-2) layers of an intermediate coating layer, and the top coating layer that are laminated in sequence, N being an integer of 3 to 5.

In some embodiments, under the condition that the non-stick coating layer is the two layers of the non-stick coating layer, the spraying is performed by a process comprising subjecting the surface of the rough glass product to base coating spraying, pre-drying at a temperature of 50°C to 150°C and top coating spraying in sequence.

In some embodiments, under the condition that the non-stick coating layer is the N layers of the non-stick coating layer, the spraying is performed by a process comprising subjecting the surface of the rough glass product to base coating spraying, pre-drying at a temperature of 50°C to 150°C, intermediate coating spraying, surface drying at a temperature of 100°C to 250°C and top coating spraying in sequence; where the intermediate coating spraying and the surface drying each are conducted (N-2) times.

In some embodiments, a surface of the top coating layer is further provided with a decorative sprinkling layer; and the top coating layer includes at least one selected from the group consisting of an inner top coating layer and an outer top coating layer.

In some embodiments, the decorative sprinkling layer has a thickness of 5 µm to 50 µm.

In some embodiments, under the condition that the surface of the top coating layer is further provided with the decorative sprinkling layer, the process further includes conducting another surface drying at a temperature of 100°C to 250°C after the top coating spraying, and then spraying the decorative sprinkling coating.

In some embodiments, during the spraying, a glass substrate to be sprayed is at a temperature of 5°C to 65°C.

In some embodiments, the sintering is conducted at a temperature of 230°C to 460°C.

The present disclosure further provides a high borosilicate glass product with a coating layer prepared by the method as described in the above solutions.

The method for preparing a non-stick coating layer on a surface of a high borosilicate glass product according to the present disclosure, including the following steps: sandblasting the high borosilicate glass product to obtain a rough glass product with a roughness of 0.5 to 4; and spraying a coating on a surface of the rough glass product to obtain a coated glass product, and sintering the coated glass product to obtain the high borosilicate glass product with a coating layer; wherein the coating layer includes at least one selected from the group consisting of the non-stick coating layer and a colored coating layer; the non-stick coating layer includes at least one selected from the group consisting of an inner surface non-stick coating layer and an outer surface non-stick coating layer; the colored coating layer includes at least one selected from the group consisting of an inner surface colored coating layer and an outer surface colored coating layer; and under the condition that the coating layer includes the non-stick coating layer and the colored coating layer, the non-stick coating layer is the inner surface non-stick coating layer and the colored coating layer is the outer surface colored coating layer. Compared with traditional alkali washing, water washing, and frosting, a rough surface with a roughness of 0.5 to 4 could be obtained by sandblasting the high borosilicate glass product, which greatly improves the adhesion of coating on the surface of high borosilicate glass; and a high bonding strength between the non-stick coating layer and/or colored coating layer and high borosilicate glass could be achieved by subsequent coating spraying and sintering. Moreover, the method according to the present disclosure has a simple process, green and pollution-free procedures, and a low production cost, and is suitable for industrial production.

The present disclosure further provides a high borosilicate glass product with a coating layer prepared by the method as described in the above solutions. By the method according to the present disclosure, a variety of high borosilicate glass products could be prepared, such as those with only the inner non-stick coating layer, only the outer surface non-stick coating layer, and both the inner surface and outer surface non-stick coating layers, or with the colored coating layer, greatly enriching types of the high borosilicate glass product with a coating layer. Moreover, the high borosilicate glass product with a coating layer according to the present disclosure exhibits a beautiful appearance and a comfortable hand feel.

As shown in the test results of the examples: the high borosilicate glass crisper with a non-stick coating layer prepared by the method according to the present disclosure shows the adhesion between a glass surface and the non-stick coating layer measured by hundred-grid test is greater than or equal to 90%, and the non-stick coating layer does not change after not less than 10 cycles during a dishwasher performance test. This indicates that the high borosilicate glass crisper with a non-stick coating layer shows a strong adhesion of the non-stick coating layer on the glass surface. The high borosilicate glass crisper with a non-stick coating layer can be used in an oven (at not greater than 230°C), and shows a non-stick property, an excellent temperature resistance and strength, indicating a desirable use experience. The high borosilicate glass crisper with a non-stick coating layer does not release harmful substances when holding food, and complies with national standards and US FDA health testing standards. The result of a wear resistance test (dry grinding, 2.5 kg weight) shows that the non-stick coating layer of the high borosilicate glass crisper with a non-stick coating layer has a wear resistance of 1,000<N≤5,000, showing excellent wear resistance of not less than Grade 3.

### DETAILED DESCRIPTION OF THE EMBODIMENTS

The present disclosure provides a method for preparing a non-stick coating layer on a surface of a high borosilicate glass product, including (or consisting of) the following steps:
sandblasting the high borosilicate glass product to obtain a rough glass product with a roughness of 0.5 to 4; and
spraying a coating on a surface of the rough glass product to obtain a coated glass product, and sintering the coated glass product to obtain the high borosilicate glass product with a coating layer; where the coating layer includes at least one selected from the group consisting of the non-stick coating layer and a colored coating layer; the non-stick coating layer includes at least one selected from the group consisting of an inner surface non-stick coating layer and an outer surface non-stick coating layer; the colored coating layer includes at least one selected from the group consisting of an inner surface colored coating layer and an outer surface colored coating layer; and under the condition that the coating layer includes the non-stick coating layer and the colored coating layer, the non-stick coating layer is the inner surface non-stick coating layer and the colored coating layer is the outer surface colored coating layer.

Unless otherwise specified, the raw materials used herein are all commercially available commodities.

The high borosilicate glass product is sandblasted to obtain a rough glass product with a roughness of 0.5 to 4.

In the present disclosure, there is no special limitation on the shape of the high borosilicate glass product, and high borosilicate glass products well-known to those skilled in the art may be used. In some embodiments, the high borosilicate glass product is one selected from the group consisting of an open glass container and a closed glass container; the open glass container is one selected form the group consisting of a soup plate, a fruit plate, a vegetable plate, a baking pan, a storage container, and a pot; and the closed glass container is one selected from the group consisting of a soup plate, a food preservation box, a storage container, a pot, and a spice box.

In some embodiments, the sand particle for the sandblasting is at least one selected from the group consisting of brown corundum and white corundum; and the sand particles have a particle size of 26 mesh to 200 mesh. In some embodiments, the sandblasting is conducted by using a tunnel sandblasting machine or a rotary table sandblasting machine.

In some embodiments, after the sandblasting is completed, the method further includes subjecting a high borosilicate glass product containing sandblast to compressed air blowing to obtain the rough glass product; and the compressed air blowing is intended to remove the residue after the sandblasting.

In some embodiments, the rough glass product has a roughness of 0.5 to 4, preferably 1 to 4, and more preferably 1 to 2. Spraying a coating on a rough surface of the rough glass product could significantly increase the adhesion and bonding strength between the high borosilicate glass product and the non-stick coating layer.

After rough glass product is obtained, a coating is sprayed on a surface of the rough glass product to obtain a coated glass product, and the coated glass product is then sintered to obtain the high borosilicate glass product with a coating layer; where the coating layer includes (or consists of) at least one selected from the group consisting of the non-stick coating layer and a colored coating layer; the non-stick coating layer includes (or consists of) at least one selected from the group consisting of an inner surface non-stick coating layer and an outer surface non-stick coating layer; the colored coating layer includes (or consists of) at least one selected from the group consisting of an inner surface colored coating layer and an outer surface colored coating layer; and under the condition that the coating layer includes (or consists of) the non-stick coating layer and the colored coating layer, the non-stick coating layer is the inner surface non-stick coating layer and the colored coating layer is the outer surface colored coating layer.

In some embodiments, under the condition that the coating layer is a non-stick coating layer, the coating is a non-stick paint. In some embodiments, under the condition that the coating layer is a colored coating layer, the coating is a colored paint.

In some embodiments, the non-stick coating layer includes (or consists of) an inner surface non-stick coating layer and/or an outer surface non-stick coating layer. In some embodiments, the inner surface non-stick coating layer and the outer surface non-stick coating layer each independently include (or consists of) one layer of the non-stick coating layer, two layers of the non-stick coating layer, or N layers of the non-stick coating layer; and N is an integer of 3 to 5, preferably 3, 4, or 5. In some embodiments, the one layer of the non-stick coating layer is a top coating layer. In some embodiments, the two layers of the non-stick coating layer consists of a base coating layer and the top coating layer that are laminated in sequence. In some embodiments, the N layers of the non-stick coating layer consists of the base coating layer, (N-2) layers of an intermediate coating layer, and the top coating layer that are laminated in sequence, and N in N-2 is the same as the N above.

In some embodiments, under the condition that the non-stick coating layer is the one layer of the non-stick coating layer, the spraying refers to spraying a top coating.

In some embodiments, under the condition that the non-stick coating layer consists of the two layers of the non-stick coating layer, the spraying is performed by a process comprising subjecting the surface of the rough glass product to base coating spraying, pre-drying and top coating spraying in sequence; and the pre-drying is conducted at a temperature of 50°C to 150°C, preferably 80°C to 130°C, and more preferably 100°C to 120°C; and the pre-drying is conducted for 3 min to 15 min, preferably 5 min to 10 min.

In some embodiments, under the condition that the non-stick coating layer consists of the N layers of the non-stick coating layer, the spraying is performed by a process comprising subjecting the surface of the rough glass product to base coating spraying, pre-drying, intermediate coating spraying, surface drying and top coating spraying in sequence; where the intermediate coating spraying and the surface drying each are conducted (N-2) times, alternately. In some embodiments, the pre-drying is conducted at a temperature of 50°C to 150°C, preferably 80°C to 130°C, and more preferably 100°C to 120°C; and the pre-drying is conducted for 3 min to 15 min, preferably 5 min to 10 min. In some embodiments, the surface drying is conducted at a temperature of 100°C to 250°C, preferably 120°C to 220°C, and more preferably 150°C to 200°C; and the surface drying is conducted for 3 min to 15 min, preferably 5 min to 10 min.

In some embodiments, under the condition that the non-stick coating layer consists of the inner surface non-stick coating layer and the outer surface non-stick coating layer, the non-stick coating layer is prepared by preparing the inner surface non-stick coating layer, surface drying, and preparing the outer surface non-stick coating layer sequentially; and the process for preparing the inner surface non-stick coating layer and the outer surface non-stick coating layer is the same as that for preparing the one layer of the non-stick coating layer, the two layers of the non-stick coating layer, or the N layers of the non-stick coating layer, and will not be described herein. In some embodiments, the surface drying is conducted at a temperature of 100°C to 250°C, preferably 120°C to 220°C, and more preferably 150°C to 200°C; and the surface drying is conducted for 3 min to 15 min, preferably 5 min to 10 min.

In some embodiments, a surface of the top coating layer is further provided with a decorative sprinkling layer; and the top coating layer includes (or consists of) at least one selected from the group consisting of an inner top coating layer and an outer top coating layer. In some embodiments, under the condition that the surface of the top coating layer is further provided with the decorative sprinkling layer, another surface drying is conducted after the top coating spraying, and the decorative sprinkling coating is then sprayed. The another surface drying is conducted at 100°C to 250°C, preferably 120°C to 220°C, and more preferably 150°C to 200°C, and the another surface drying is conducted for 3 min to 15 min, preferably 5 min to 10 min.

In some embodiments, the colored coating layer includes at least one selected from the group consisting of an inner surface colored coating layer and an outer surface colored coating layer, and the number of layers of the inner surface colored coating layer and the outer surface color coating each is 1 to 2 independently. The preparation process of the colored coating layer is the same as that of the one layer of the non-stick coating layer or the two layers of the non-stick coating layer, and will not be described herein.

There are no special limitations on components of the base coating (inner base coating and outer base coating), the intermediate coating (inner intermediate coating and outer intermediate coating), the top coating (inner top coating and outer top coating), and the colored coating layer (inner colored coating layer and outer colored coating layer), and coatings for preparing the non-stick coating layer or colored coating layer of the high borosilicate glass product that are well-known to those skilled in the art may be used. Specifically, an oil-based non-stick coating layer or water-based coating, such as a ceramic-based coating, a resin-based coating, or a polytetrafluoroethylene (PTFE)-based coating may be used. In some embodiments, the base coating, the intermediate coating, the top coating, and the colored coating layer are a water-based coating.

In some embodiments, under the condition that the coating layer consists of the non-stick coating layer and the colored coating layer, the non-stick coating layer is an inner surface non-stick coating layer, and the colored coating layer is an outer surface colored coating layer; and the coating layer is prepared by preparing the inner surface non-stick coating layer, surface drying, and preparing the outer surface colored coating layer sequentially. The preparation process of the inner surface non-stick coating layer is the same as that of the one layer of the non-stick coating layer, the two layers of the non-stick coating layer, or the N layers of the non-stick coating layer, and will not be described herein. The surface drying is conducted at 100°C to 250°C, preferably 120°C to 220°C, and more preferably 150°C to 200°C, and the surface drying is conducted for 3 min to 15 min, preferably 5 min to 10 min. The preparation process of the colored coating layer is the same as that of the colored coating layer, and will not be described herein.

In some embodiments, during the spraying, a substrate to be sprayed is at a temperature of 5°C to 65°C, preferably 20°C to 60°C, and more preferably 23°C to 55°C. In some embodiments, under the condition that the substrate to be sprayed is not at a temperature of 5°C to 65°C, it is subjected to heating or cooling to the temperature of 5°C to 65°C; and the heating is conducted by electric auxiliary heating. There is no special limitation on the cooling, and any cooling manners well-known to those skilled in the art may be used, such as natural cooling.

In some embodiments, the sintering is conducted at a temperature of 230°C to 460°C, preferably 300°C to 460°C, and more preferably 380°C to 460°C; and the sintering is conducted for 8 min to 13 min, preferably 10 min to 12 min. There is no particular limitation on a device for the sintering, and any device well-known to those skilled in the art may be used, such as a sintering furnace.

In some embodiments, after the sintering is completed, a sintered high borosilicate glass product with a coating layer is cooled to room temperature, and a qualified high borosilicate glass product with a coating layer is packaged and stored in a warehouse. There is no special limitation on the cooling, and the product could be cooled to room temperature by using a cooling manner well-known to those skilled in the art.

The present disclosure further provides a high borosilicate glass product with a coating layer prepared by the method as described in the above.

In some embodiments, the coating layer includes at least one selected from the group consisting of the non-stick coating layer and a colored coating layer; the non-stick coating layer includes at least one selected from the group consisting of an inner surface non-stick coating layer and an outer surface non-stick coating layer; the colored coating layer includes at least one selected from the group consisting of an inner surface colored coating layer and an outer surface colored coating layer; and under the condition that the coating layer includes the non-stick coating layer and the colored coating layer, the non-stick coating layer is the inner surface non-stick coating layer and the colored coating layer is the outer surface colored coating layer.

In some embodiments, the inner surface non-stick coating layer and the outer surface non-stick coating layer each independently includes one layer of the non-stick coating layer, two layers of the non-stick coating layer, or N layers of the non-stick coating layer. In some embodiments, the one layer of the non-stick coating layer is a top coating layer. In some embodiments, the two layers of the non-stick coating layer consists of a base coating layer and the top coating layer that are laminated in sequence. In some embodiments, the N layers of the non-stick coating layer consists of the base coating layer, (N-2) layers of an intermediate coating layer, and the top coating layer that are laminated in sequence, N being an integer of 3 to 5.

In some embodiments, the base coating layer (inner base coating layer and outer base coating layer) has a dry film thickness that is independently in a range of 9 µm to 17 µm, preferably 10 µm to 15 µm; and the top coating layer (inner top coating layer and outer top coating layer) has a dry film thickness that is independently in a range of 7 µm to 16 µm, preferably 10 µm to 15 µm; and a single-layer intermediate coating layer (inner intermediate coating layer and outer intermediate coating layer) of intermediate coating layer has a dry film thickness that is independently in a range of 12 µm to 23 µm, preferably 15 µm to 20 µm. In some embodiments, a decorative sprinkling layer is further provided on a surface of the inner top coating layer and/or the outer top coating layer; and the decorative sprinkling layer has a thickness of 5 µm to 50 µm, preferably 10 µm to 40 µm.

In some embodiments, in the colored coating layer, the number of layers of the inner surface colored coating layer and the outer surface colored coating layer each is independently 1 to 2; and the colored coating layer (inner surface colored coating layer and outer surface colored coating layer) has a total thickness that is independently in a range of 7 µm to 16 µm, preferably 10 to 15 µm on dry film thickness.

The technical solutions of the present disclosure will be further clearly and completely described below with reference to the examples of the present disclosure. Apparently, the examples are merely a part rather than all of the examples of the present disclosure. All other embodiments obtained by those skilled in the art based on the embodiments of the present disclosure without creative efforts shall fall within the scope of the present disclosure.

### Example 1

High borosilicate glass product with a non-stick coating layer having one outer coating only (single layer) was prepared as follows.
1. Sandblasting: an outer surface of a high borosilicate glassware was sandblasted to obtain a sandblasted high borosilicate glassware having a rough surface with a roughness of 1.5.
2. Dust removal: a surface of the sandblasted high borosilicate glassware after sandblasting was cleaned with compressed air to obtain a cleaned high borosilicate glassware.
3. Preheating: the cleaned high borosilicate glassware was placed in a preheating furnace and then preheated to 56°C. After that, the following outer top coating spraying will be conducted.
4. Spraying (outer top coating spraying): a preheated high borosilicate glassware was placed into a spraying chamber and then sprayed with a top coating (purchased from Zhejiang PFLUON Technology Co., Ltd., model: A5500-31541, a dry film thickness after the spraying was 15 µm).
5. Sintering: after spraying with the top coating was completed, a resulting high borosilicate glassware was placed in a sintering furnace and then sintered at 380°C for 10 min to obtain a sintered high borosilicate glassware.
6. Cooling: the sintered high borosilicate glassware was placed into a cooling chamber and then cooled to 30°C to obtain a high borosilicate glass product with a non-stick coating layer, which will be sent for inspection.

### Example 2

High borosilicate glass product with a non-stick coating layer having inner and outer coatings (both in single layer) was prepared as follows.
1. Sandblasting: inner and outer surfaces of a high borosilicate glassware were sandblasted to obtain a sandblasted high borosilicate glassware having a rough surface with a roughness of 1.2.
2. Dust removal: a surface of the sandblasted high borosilicate glassware after sandblasting was cleaned with compressed air to obtain a cleaned high borosilicate glassware.
3. Preheating: the cleaned high borosilicate glassware was placed in a preheating furnace and then preheated to 40°C. After that, the following inner top coating spraying will be conducted.
4. Spraying (inner top coating spraying): a preheated high borosilicate glassware was placed into a spraying chamber and then sprayed with an inner top coating (purchased from Zhejiang PFLUON Technology Co., Ltd., model: W8836-54055T, a dry film thickness after the spraying was 14 µm).
5. Surface drying: after spraying with the inner top coating was completed, a resulting high borosilicate glassware was placed in a drying oven and then subjected to surface drying at 120°C for 8 min.
6. Cooling: a resulting dried high borosilicate glassware was placed in a cooling chamber and then cooled to 30°C to obtain a high borosilicate glassware with an inner top coating layer.
7. Preheating: the high borosilicate glassware with an inner top coating was placed in a preheating furnace and then preheated to 49°C. After that, the following outer top coating spraying will be conducted.
8. Spraying (outer top coating spraying): a preheated high borosilicate glassware with an inner top coating was placed into a spraying chamber and then sprayed with an outer top coating (purchased from Zhejiang PFLUON Technology Co., Ltd., model: A5500-31541, a dry film thickness after the spraying was 15 µm).
9. Sintering: after spraying with the outer top coating was completed, a resulting the high borosilicate glassware was placed in a sintering furnace and then sintered at 390°C for 9 min to obtain a sintered high borosilicate glassware.
10. Cooling: the sintered high borosilicate glassware was placed into a cooling chamber and then cooled to 28°C to obtain a high borosilicate glass product with a non-stick coating layer, which will be sent for inspection.

### Example 3

High borosilicate glass product with a non-stick coating layer having inner and outer coatings (three layers of inner coating and one layer of outer coating) was prepared as follows.
1. Sandblasting: inner and outer surfaces of a high borosilicate glassware were sandblasted to obtain a sandblasted high borosilicate glassware having a rough surface with a roughness of 1.4.
2. Dust removal: a surface of the sandblasted high borosilicate glassware after sandblasting was cleaned with compressed air to obtain a cleaned high borosilicate glassware.
3. Preheating: the cleaned high borosilicate glassware was placed in a preheating furnace and then preheated to 38°C. After that, the following inner top coating spraying will be conducted.
4. Spraying (inner base coating spraying): a preheated high borosilicate glassware was placed into a spraying chamber and then sprayed with an inner base coating (purchased from Zhejiang PFLUON Technology Co., Ltd., model: W8838S-28846P, a dry film thickness after the spraying was 12 µm).
5. Pre-drying: after spraying with the inner base coating, a resulting high borosilicate glassware was placed in a drying oven and subjected to pre-drying at 80°C for 8 min.
6. Spraying (inner intermediate coating spraying): a pre-dried high borosilicate glassware was placed in a spraying chamber and then sprayed with the inner intermediate coating (purchased from Zhejiang PFLUON Technology Co., Ltd., model: W8838S-28846M, a dry film thickness after the spraying was 15 µm).
7. Surface drying: after spraying with the inner intermediate coating was completed, a resulting high borosilicate glassware was placed in a drying oven and then subjected to surface drying at 130°C for 8 min.
8. Spraying (inner top coating spraying): a resulting high borosilicate glassware was placed in a spraying chamber and then sprayed with an inner top coating (purchased from Zhejiang PFLUON Technology Co., Ltd., model: W8838S-28846T, a dry film thickness after the spraying was 14 µm).
9. Surface drying: after spraying with the inner top coating was completed, a resulting high borosilicate glassware was placed in a drying oven and then subjected to surface drying at 150°C for 9 min.
10. Cooling: the resulting high borosilicate glassware after surface drying was placed in a cooling chamber and cooled to 36°C to obtain a high borosilicate glassware with inner coatings.
11. Preheating: the high borosilicate glassware with inner coatings was placed in a preheating furnace and then preheated to 50°C. After that, the following outer top coating spraying will be conducted.
12. Spraying (outer top coating spraying): a preheated high borosilicate glassware with inner coatings was placed in a spraying chamber and then sprayed with an outer top coating (purchased from Zhejiang PFLUON Technology Co., Ltd., model: A5500-31541, a dry film thickness after the spraying was 14 µm).
13. Sintering: after spraying with the top coating was completed, a resulting high borosilicate glassware was placed in a sintering furnace and then sintered at 385°C for 9 min to obtain a sintered high borosilicate glassware.
14. Cooling: the sintered high borosilicate glassware was placed in a cooling chamber and then cooled to 28°C to obtain a high borosilicate glass product with a non-stick coating layer, which will be sent for inspection.

### Example 4

High borosilicate glass product with a non-stick coating layer having sprinkling (three layers of each of inner coating and outer coating) was prepared as follows.
1. Sandblasting: inner and outer surfaces of a high borosilicate glassware were sandblasted to obtain a sandblasted high borosilicate glassware having a rough surface with a roughness of 1.3.
2. Dust removal: a surface of the sandblasted high borosilicate glassware after sandblasting was cleaned with compressed air to obtain a cleaned high borosilicate glassware.
3. Preheating: the cleaned high borosilicate glassware was placed in a preheating furnace and then preheated to 57°C. After that, the following inner top coating spraying will be conducted.
4. Spraying (inner base coating spraying): a preheated high borosilicate glassware was placed into a spraying chamber and then sprayed with an inner base coating (purchased from Zhejiang PFLUON Technology Co., Ltd., model: W8636M-7116P, a dry film thickness after the spraying was 13 µm).
5. Pre-drying: after spraying with the inner base coating, a resulting high borosilicate glassware was placed in a drying oven and subjected to pre-drying at 140°C for 8 min.
6. Spraying (inner intermediate coating spraying): a pre-dried high borosilicate glassware was placed in a spraying chamber and then sprayed with the inner intermediate coating (purchased from Zhejiang PFLUON Technology Co., Ltd., model: W8636M-7116T, a dry film thickness after the spraying was 14 µm).
7. Surface drying: after spraying with the inner intermediate coating was completed, a resulting high borosilicate glassware was placed in a drying oven and then subjected to surface drying at 180°C for 8 min.
8. Spraying (inner top coating spraying): a resulting high borosilicate glassware was placed in a spraying chamber and then sprayed with an inner top coating (purchased from Zhejiang PFLUON Technology Co., Ltd., model: W8903S-9006, a dry film thickness after the spraying was 12 µm).
9. Surface drying: after spraying with the inner top coating was completed, a resulting high borosilicate glassware was placed in a drying oven and then subjected to surface drying at 120°C for 8 min.
10. Cooling: the resulting high borosilicate glassware after surface drying was placed in a cooling chamber and cooled to 36°C to obtain a high borosilicate glassware with inner coatings.
11. Preheating: the high borosilicate glassware with inner coatings was placed in a preheating furnace and then preheated to 60°C. After that, the following outer top coating spraying will be conducted.
12. Spraying (outer base coating spraying): a preheated high borosilicate glassware with inner coatings was placed in a spraying chamber and then sprayed with an outer base coating (purchased from Zhejiang PFLUON Technology Co., Ltd., model: A5500-21340, a dry film thickness after the spraying was 13 µm).
13. Pre-drying: after spraying with the outer base coating, a resulting high borosilicate glassware was placed in a drying oven and subjected to pre-drying at 110°C for 8 min.
14. Spraying (outer intermediate coating spraying): a pre-dried high borosilicate glassware was placed in a spraying chamber and then sprayed with the outer intermediate coating (purchased from Zhejiang PFLUON Technology Co., Ltd., model: A5500-8235, a dry film thickness after the spraying was 12 µm).
15. Spraying (outer top coating spraying): a preheated high borosilicate glassware was placed in a spraying chamber and then sprayed with an outer top coating (purchased from Zhejiang PFLUON Technology Co., Ltd., model: A5500-2283-DY, a dry film thickness after the spraying was 12 µm).
16. Sintering: after spraying with the outer top coating was completed, a resulting high borosilicate glassware was placed in a sintering furnace and then sintered at 450°C for 13 min to obtain a sintered high borosilicate glassware.
17. Cooling: the sintered high borosilicate glassware was placed in a cooling chamber and then cooled to 36°C to obtain a high borosilicate glass product with a non-stick coating layer, which will be sent for inspection.

### Test Example 1

Performance test of the high borosilicate glass products with a non-stick coating layer prepared in Examples 1 to 4
1. Wear resistance test: dry grinding more than 6,000 times (2.5 kg, replacing the hundred-grid cloth every 500 times).
2. Oven test: the high borosilicate glass products with a non-stick coating layer prepared in Examples 1 to 4 were placed in an oven at 220°C for more than 30 min.
3. Heat-resistance temperature difference test: the high borosilicate glass products with a non-stick coating layer prepared in Examples 1 to 4 were held at a temperature of 120°C for 30 min and then retained in water for 1 min.
4. Dishwasher test: the high borosilicate glass products with a non-stick coating layer prepared in Examples 1 to 4 were placed in a dishwasher for standard washing: 102 min, for 50 cycles or more.
5. Microwave test: the high borosilicate glass products with a non-stick coating layer prepared in Examples 1 to 4 were placed in a 1,000 W microwave oven and heated at high heat for 5 min for three cycles or more.
6. Hundred-grid test: the test was conducted by using 2.4 mm hundred-grid plate and 3 M tape, and whether the entire grid had fallen off was observed.
7. Heavy metals: the non-stick coating layers prepared in Examples 1 to 4 all comply with FDA/PFDA standards.
8. Non-stick function test: 150 g of eggs (without eggshells) and 50 g of dry wheat flour were placed on the surface of each of the high borosilicate glass products with a non-stick coating layer prepared in Examples 1 to 4, and heated in an oven at 230°C for 15 min, and the heating was repeated 3 times to observe whether there was adhesion.

The test results are as follows.

The high borosilicate glass crisper with a non-stick coating layer prepared by the method according to the present disclosure could be used in an oven (below 230°C) and has a non-stick property, an excellent temperature resistance and strength, exhibiting a desirable use experience.

The high borosilicate glass crisper with a non-stick coating layer prepared by the method according to the present disclosure does not release harmful substances when holding food, and complies with national standards and US FDA health testing standards.

The high borosilicate glass crisper with a non-stick coating layer prepared by the method according to the present disclosure shows the adhesion between a glass surface and the non-stick coating layer measured by hundred-grid test is greater than or equal to 90%, and the non-stick coating layer does not change after not less than 10 cycles during a dishwasher performance test. This indicates that the high borosilicate glass crisper with a non-stick coating layer shows a strong adhesion of the non-stick coating layer on the glass surface.

The result of a wear resistance test (dry grinding, 2.5 kg weight) shows that the non-stick coating layer of the high borosilicate glass crisper with a non-stick coating layer has a wear resistance of 1,000<N≤5,000, showing excellent wear resistance of not less than Grade 3.

The high borosilicate glass product with a non-stick coating layer exhibits a beautiful appearance and a comfortable hand feel.

The above are merely preferred embodiments of the present disclosure. It should be noted that a person of ordinary skill in the art may further make several improvements and modifications without departing from the principle of the present disclosure, and such improvements and modifications should be deemed as falling within the scope of the present disclosure.

## Claims

1. A method for preparing a non-stick coating layer on a surface of a high borosilicate glass product, comprising the following steps:
sandblasting the high borosilicate glass product to obtain a rough glass product with a roughness of 0.5 to 4; and
spraying a coating on a surface of the rough glass product to obtain a coated glass product, and sintering the coated glass product to obtain a high borosilicate glass product with a coating layer;
wherein the coating layer comprises at least one selected from the group consisting of the non-stick coating layer and a colored coating layer; the non-stick coating layer comprises at least one selected from the group consisting of an inner surface non-stick coating layer and an outer surface non-stick coating layer; the colored coating layer comprises at least one selected from the group consisting of an inner surface colored coating layer and an outer surface colored coating layer; and
under the condition that the coating comprises the non-stick coating layer and the colored coating layer, the non-stick coating layer is the inner surface non-stick coating layer and the colored coating layer is the outer surface colored coating layer.

2. The method according to claim 1, wherein the inner surface non-stick coating layer and the outer surface non-stick coating layer each independently comprise one layer of the non-stick coating layer, two layers of the non-stick coating layer, or N layers of the non-stick coating layer; the one layer of the non-stick coating layer is a top coating layer; the two layers of the non-stick coating layer comprise a base coating layer and the top coating layer that are laminated in sequence; and the N layers of the non-stick coating layer comprise the base coating layer, (N-2) layers of an intermediate coating layer, and the top coating layer that are laminated in sequence, N being an integer of 3 to 5.

3. The method according to claim 2, wherein under the condition that the non-stick coating layer is the two layers of the non-stick coating layer, the spraying is performed by a process comprising subjecting the surface of the rough glass product to base coating spraying, pre-drying at a temperature of 50°C to 150°C, and top coating spraying in sequence.

4. The method according to claim 2, wherein under the condition that the non-stick coating layer is the N layers of the non-stick coating layer, the spraying is performed by a process comprising subjecting the surface of the rough glass product to base coating spraying, pre-drying at a temperature of 50°C to 150°C, intermediate coating spraying, surface drying at a temperature of 100°C to 250°C, and top coating spraying in sequence; wherein the intermediate coating spraying and the surface drying each are conducted (N-2) times.

5. The method according to any one of claims 2 to 4, wherein a surface of the top coating layer is further provided with a decorative sprinkling layer; and the top coating layer comprises at least one selected from the group consisting of an inner top coating layer and an outer top coating layer.

6. The method according to claim 5, wherein the decorative sprinkling layer has a thickness of 5 µm to 50 µm.

7. The method according to claim 6, wherein under the condition that the surface of the top coating layer is further provided with the decorative sprinkling layer, the process further comprises conducting another surface drying at a temperature of 100°C to 250°C after the top coating spraying, and then spraying the decorative sprinkling coating.

8. The method according to claim 1, 2, 3, 4, 6, or 7, wherein during the spraying, a glass substrate to be sprayed is at a temperature of 5°C to 65°C.

9. The method according to claim 1, wherein the sintering is conducted at a temperature of 230°C to 460°C.

10. A high borosilicate glass product with a coating layer prepared by the method according to any one of claims 1 to 9.
